# EUROPÄISCHE PATENTSCHRIFT

(11) **EP 1 763 259 B1**
(45) Veröffentlichungstag und Bekanntmachung des Hinweises auf die Patenterteilung: **08.10.2014**
(21) Anmeldenummer: 06118757.1
(22) Anmeldetag: 10.08.2006
(51) Int. Cl.: G03B 35/10, G02B 27/22, H04N 13/02, B60N 2/00

(54) **Kostengünstiges stereooptisches System**
Low-cost stereo-optical system
Système stereooptique à prix réduit

(30) Priorität: 13.09.2005 DE 102005043411
(43) Veröffentlichungstag der Anmeldung: 14.03.2007
(73) Patentinhaber: ROBERT BOSCH GMBH, 70442 Stuttgart (DE)
(72) Erfinder: Loewe, Andreas, 31246 Lahstedt (DE); Bothe, Hans-Dieter, 30926 Seelze (DE); Freienstein, Heiko, 71263 Weil Der Stadt (DE); Engelberg, Thomas, 31137 Hildesheim (DE); Luther, Marc, 31228 Peine (DE)

(56) Entgegenhaltungen:
- DE-A1-102004 056 668
- US-A- 5 522 789
- US-A1- 2001 004 298
- US-A1- 2005 057 806

## Beschreibung

Die Erfindung betrifft ein stereoskopisches Abbildungssystem, welches beispielsweise für den Einsatz im Kraftfahrzeug geeignet ist, beispielsweise zur Insassenerkennung. Darüber hinaus sind weitere Einsatzfelder, beispielsweise in der Robotik, denkbar. Weiterhin betrifft die Erfindung ein stereoskopisches Objekterkennungssystem, welches mindestens ein erfindungsgemäßes stereoskopisches Abbildungssystem sowie mindestens eine Auswertungsvorrichtung umfasst. Derartige stereoskopische Abbildungssysteme und stereoskopische Objekterkennungssysteme können beispielsweise in Sicherheitssystemen eingesetzt werden, beispielsweise, um die Steuerung der Auslösung von Airbags oder Gurtstraffem an die Position eines Kraftfahrzeuginsassen im Moment eines Unfalls anzupassen.

### Stand der Technik

Stereoskopische Bilderkennungssysteme für den Einsatz in der Automobiltechnologie sind aus dem Stand der Technik bekannt. Beispielsweise offenbart US 6,396,397 B1 ein stereoskopisches Abbildungssystem für ein Fahrzeug, welches eine Berechnung eines Abstandes zwischen einem oder mehreren Sensoren am Fahrzeug und einer Lichtquelle oder einem Objekt in einem Bildbereich vor dem Fahrzeug durchführt. Das stereoskopische Bilderkennungssystem bestimmt den Abstand zum Objekt durch Vergleich der Signale, welche von zwei verschiedenen Bildsensoren aufgenommen werden. Aus der bekannten Anordnung der Sensoren sowie der eingesetzten Optik kann dann die Position bzw. der Abstand des Objekts berechnet werden. Beispielsweise lassen sich dabei Triangulationsverfahren einsetzen.

Diese aus dem Stand der Technik bekannten Stereosysteme, beispielsweise das in US 6,396,397 B1 offenbarte Stereosystem, stellen jedoch hohe Anforderungen an die Positionierungs- und Ausrichtungsgenauigkeit der eingesetzten Systemkomponenten. Insbesondere müssen die eingesetzten Spiegelflächen exakt positioniert und ausgerichtet werden. In der Automobiltechnologie ist der mit dieser Justage verbundene Aufwand insbesondere bei Low-Cost-Systemen im Kraftfahrzeuginnenraum nahezu untragbar. Weiterhin beinhalten die bekannten Stereosysteme den Nachteil, dass Verschmutzungen durch ein offenes Gehäuse wie in der US 6,396,397 B1 und/oder Dejustage der Systemkomponenten auftreten können, wodurch die Messfunktion beeinträchtigt wird. Durch diesen Nachteil ist eine Anwendung im Kraftfahrzeugbereich insbesondere für sicherheitsrelevante Funktionen oftmals nicht möglich.

Ein weiterer Nachteil der bekannten stereoskopischen Systeme besteht darin, dass diese in der Regel zahlreiche Einzelteile aufweisen, was wiederum einen hohen Aufwand für Fertigung, Montage und Justage bedeutet. Weiterhin beinhaltet die in US 6,396,397 B1 vorgeschlagene Vorrichtung den Nachteil, dass nur eine Linse pro optischem Pfad offenbart wird. Dadurch ergeben sich grundsätzliche Einschränkungen bei der Systemauslegung. Insbesondere kann der Öffnungswinkel bei vorgegebenen Abmessungen des Gesamtsystems nicht beliebig groß gewählt werden. Weiterhin weist eine derartige Optik keine guten Abbildungsqualitäten auf. Ein weiterer Nachteil der in US 6,396,397 B1 offenbarten Vorrichtung besteht darin, dass keine Lösungen zur Vermeidung von Verkippung der optischen Komponenten zueinander und relativ zur Sensorfläche vorgesehen sind. Zudem fehlen Verfahren, Vorrichtungen und spezielle Ausgestaltung der Systemkomponenten dahingehend, dass fertigungsbedingte Bauteil-Toleranzen geeignet ausgeglichen werden können. Insgesamt ist also festzustellen, dass die offenbarte Vorrichtung nicht nur einen erhöhten Justageaufwand impliziert, sondern auch störanfällig ist, insbesondere gegen im Automobilbereich häufig auftretende Erschütterungen.

Aus US2005/0057806 A1 ist ein Stereo-Optiksystem für Kraftfahrzeuge bekannt, das zwei Abbildungsarme umfasst, die jeweils mit einem Frontlinsensystem und Spiegeln versehen sind. Licht, das durch die Frontlinsensysteme in das Stereo-Optiksystem eintreten, wird durch die Spiegel zu einem Linsensystem gelenkt und trifft auf einen Bildgebungschip. Dabei ist das Linsensystem mit einem Gruppe von Filtern ausgestattet. Die auf den Bildgebungschip fallenden Lichtstrahlen erzeugen Bilder, auf deren Basis eine dreidimensionale Auswertung der Fahrzeugumgebung erfolgen kann.

US 2001/0004298 A1 offenbart ein stereooptisches System, das über zwei Abbildungsarme verfügt, die jeweils Frontlinsen und Spiegel umfassen. Durch die Frontlinsen eintretendes Licht wird mittels der Spiegel zu einem optischen Kopplungselement gelenkt, das die Strahlengänge beider Abbildungsarme verbindet. Das optische Kopplungselement kann dabei als Prisma ausgebildet sein. Die vom optischen Kopplungselement kombinierten Lichtstrahlen durchtreten ferner eine Vielzahl an weiteren Linsen und einen Low-Pass-Filter, der vor einer Farbtrennvorrichtung angeordnet ist. Die Farbtrennvorrichtung kann dabei als Prisma ausgebildet sein und teilt den kombinierten Strahlengang nach Farben. Hinter der Farbtrennvorrichtung treffen die nach Farben separierten Strahlengänge jeweils auf eine Bildgebungsebene, die als Oberfläche eines Bildchips ausgebildet sein kann.

Aus US 5,522,789 A ist ein Stereo-Endoskop bekannt, das ein Paar Frontlinsen umfasst, die jeweils mit einem Lichtleiter gekoppelt sind. Die Lichtleiter führen die durch die Frontlinsen in das Stereo-Endoskop eintretenden Lichtstrahlen zu einem Bildgebungssystem, das mit zwei Bildgebungschips versehen ist. Die Bildgebungschips können mechanisch bewegt werden, so dass ein Versatz eines Objekts auf dem Bildgebungschip ausgeglichen werden kann, der durch eine Veränderung des Zoomfaktors hervorgerufen werden kann.

### Vorteile der Erfindung

Es wird daher ein stereoskopisches Abbildungssystem vorgeschlagen, welches die Nachteile der aus dem Stand der Technik bekannten Systeme vermeidet. Insbesondere ist das System robust und kostengünstig und kann zur dreidimensionalen Umfeld-Erfassung und -Vermessung im Kraftfahrzeugbereich, vorzugsweise im Innenraum eines Kraftfahrzeugs, eingesetzt werden. Das stereoskopische Abbildungssystem ist jedoch grundsätzlich universell einsetzbar, so dass auch andere Anwendungen in Betracht kommen.

Ein Grundgedanke der vorliegenden Erfindung besteht darin, das stereoskopische Abbildungssystem derart auszugestalten, dass dieses ein optisches System aufweist, um eine Umgebung auf mindestens einen Bildsensor, vorzugsweise genau einen Bildsensor, abzubilden. Dies bedeutet eine erhebliche Kostenersparnis. Das optische System ist dabei derart ausgestaltet, dass geeignete Linsen oder Linsengruppen innerhalb des optischen Systems und somit im Innenraum des stereoskopischen Abbildungssystems nahezu parallele Strahlenbündel erzeugen, die mit Hilfe von Spiegeln beliebig umgelenkt werden können. Diese Erzeugung der nahezu parallelen Strahlenbündel im optischen System ermöglicht erheblich höhere Lage-Toleranzen der optischen Bauteile zueinander sowie größere Bauteil-Toleranzen. Insbesondere ist es dabei bevorzugt, wenn die Strahlenbündel im stereoskopischen Abbildungssystem Öffnungen von nicht mehr als 2°, vorzugsweise von nicht mehr als 1,5° und besonders bevorzugt von nicht mehr als 1° aufweisen. Dies ist im Folgenden unter einem "nahezu parallelen Strahlengang" zu verstehen.

Zur Verwirklichung dieses Grundgedankens weist das stereoskopische Abbildungssystem mindestens einen Bildsensor zur Aufnahme von Bilddaten sowie drei Abbildungsarme auf von mindestens zwei der Abbildungsarme umfasst der mindestens ein Frontlinsensystem und mindestens ein Abbildungslinsensystem. Unter einem "Linsensystem" kann dabei eine Kombination aus einer oder mehreren Linsen verstanden werden, wobei jedoch auch zusätzliche optische Komponenten, wie beispielsweise Filter oder Blenden, eingesetzt werden können. Frontlinsensystem und Abbildungslinsensystem sind dabei derart angeordnet, dass Lichtstrahlen, die von einem Objekt ausgehen und in das stereoskopische Abbildungssystem eintreten, zunächst das Frontlinsensystem passieren und anschließend das Abbildungslinsensystem, um schließlich auf eine Sensorfläche des mindestens einen Bildsensors aufzutreffen. Dabei sei darauf hingewiesen, dass neben dem mindestens einen Frontlinsensystem und dem mindestens einen Abbildungslinsensystem auch zusätzliche Linsensysteme vorgesehen sein können. Zudem müssen die Linsensysteme nicht als Einheit ausgebildet sein, sondern es können auch räumlich getrennte Komponenten vorgesehen sein. Weiterhin müssen die mindestens zwei Abbildungsarme auch nicht vollständig voneinander getrennt sein, sondern es können auch gemeinsame Komponenten vorgesehen sein, beispielsweise Spiegel oder Linsen, welche von mehr als einem Abbildungsarm gleichzeitig genutzt werden.

Weiterhin umfasst das stereoskopische Abbildungssystem in jedem Abbildungsarm mindestens ein Spiegelsystem zur Umlenkung eines Strahlenganges von durch das mindestens eine Frontlinsensystem eintretenden Lichtstrahlen auf den mindestens einen Bildsensor. Dieses mindestens eine Spiegelsystem sollte dabei vorzugsweise im Strahlengang zwischen dem mindestens einen Frontlinsensystem und dem mindestens einen Abbildungslinsensystem angeordnet sein. Unter "zwischen" ist dabei zu verstehen, dass im Strahlengang eines von einem Objekt her kommenden Strahls zunächst mindestens eine Linse des mindestens einen Frontlinsensystems passiert wird (wobei sinngemäß auch eine Halblinse gemeint sein kann), anschließend mindestens ein Spiegel des mindestens einen Spiegelsystems und schließlich mindestens eine Linse (oder Halblinse) des mindestens einen Abbildungslinsensystems. Dennoch können auch weitere Komponenten zwischen den genannten Komponenten vorgesehen sein.

Insgesamt ist unter einem "Spiegelsystem" ein System zu verstehen, welches mindestens eine Spiegelfläche und/oder einen Spiegel aufweist. Unter einem "Spiegel" ist dabei der Gesamtaufbau zu verstehen, also beispielsweise die gesamte Schichtenfolge eines Spiegels, welche nicht nur Reflexionsschichten (z. B. metallische oder dielektrische Reflexionsschichten) umfassen kann, sondern auch ein Spiegelsubstrat, ein Spiegelgehäuse oder Klebstoffe.

Jedem der Abbildungsarme kann dabei mindestens ein Bildbereich auf dem mindestens einen Bildsensor zugeordnet sein. Diese Bildbereiche der einzelnen Abbildungsarme müssen jedoch nicht notwendigerweise räumlich getrennt sein, sondern können auch beispielsweise überlappen oder eine komplexere, ineinander greifende Geometrie aufweisen. Weiterhin können die Bildbereiche verschiedener Abbildungsarme auch identisch sein, beispielsweise wenn Bilddaten der einzelnen Abbildungsarme nacheinander betrachtet werden (beispielsweise beim Multiplexing-Verfahren, siehe unten). Auch andere Trennungen der Bilddaten der einzelnen Abbildungsarme sind denkbar, beispielsweise mittels einer spektralen Trennung.

Jedes der Frontlinsensysteme weist vorzugsweise einen Bilderfassungsbereich auf. Dabei ist das stereoskopische Abbildungssystem derart ausgestaltet, dass mindestens eines dieser Frontlinsensysteme in mindestens einem der Abbildungsarme, vorzugsweise in jedem der Abbildungsarme, bildseitig einen nahezu parallelen Strahlengang, beispielsweise ähnlich einer bildseitig telezentrischen Abbildung, aufweist. Dabei ist unter der Bildseite im erfindungsgemäßen Abbildungssystem definitionsgemäß die dem Bildsensor im Strahlengang zugewandte Seite des Frontlinsensystems zu verstehen.

Das erfindungsgemäße stereoskopische Abbildungssystem weist gegenüber aus dem Stand der Technik bekannten Vorrichtungen zahlreiche Vorteile auf. So bewirkt der beschriebene Aufbau mit mindestens zwei Linsensystemen (Frontlinsensystem und Abbildungslinsensystem) in jedem Abbildungsarm den Vorteil, dass sich keine Einschränkung bezüglich des Öffnungswinkels der erfassten Bilderfassungsbereiche ergibt. Der Erfassungsbereich ist jeweils nur durch die Ausgestaltung des Frontlinsensystems bestimmt. Das mindestens eine Frontlinsensystem in jedem Abbildungsarm kann jedoch je nach Anwendung einfach ausgetauscht werden. Dadurch wird ein modularer Aufbau im "Baukasten-Prinzip" möglich. Der einfache Austausch des Frontlinsensystems ist insbesondere dadurch begünstigt, dass der Strahlengang im Inneren des Abbildungsarms nahezu parallel zur optischen Achse verläuft. Somit kann das erfindungsgemäße stereoskopische Abbildungssystem beispielsweise an verschiedene Innenräume von Kraftfahrzeugen angepasst werden, beispielsweise einerseits Reisebusse und andererseits Personenkraftfahrzeuge, ohne dass eine aufwändige Neugestaltung des Systems erforderlich wird. Auch kann das System beispielsweise von einem Einsatz im Innenbereich eines Kraftfahrzeugs einfach auf einen Einsatz im Außenbereich umgestaltet werden.

Weiterhin kann auch das mindestens eine Abbildungslinsensystem in den Abbildungsarmen einfach ausgetauscht werden. Auf diese Weise kann eine einfache Anpassung an verschiedene Bildsensoren erfolgen, beispielsweise eine Anpassung an einen Bildsensor mit höherer Auflösung. Auch hier ist somit ein "Baukasten-Prinzip" möglich, so dass beispielsweise eine Nachrüstung des Systems oder eine Anpassung problemlos möglich ist. Insgesamt zeichnet sich das erfindungsgemäße System daher durch eine hohe Flexibilität aus, da eine "Basis-Plattform", welche in größeren Mengen auf Lager gehalten werden kann, einfach an verschiedene Einsatzgebiete oder beispielsweise Modelle von Kraftfahrzeugen angepasst werden kann.

Weiterhin wird durch das erfmdungsgemäße System mit den mindestens zwei Linsensystemen (Frontlinsensystem und Abbildungslinsensystem) in jedem Abbildungsarm eine hohe Bildqualität erzielt. Dies ist insbesondere dadurch begründet, dass das mindestens eine Frontlinsensystem optimal für einen Einfang der Lichtstrahlen aus dem jeweiligen Bilderfassungsbereich ausgestaltet werden kann, wohingegen das mindestens eine Abbildungslinsensystem optimal an die Abbildung dieser Lichtstrahlen auf den mindestens einen Bildsensor angepasst werden kann. Somit lassen sich die optischen Eigenschaften, wie beispielsweise Auflösung, Tiefenschärfe, Bildverzerrungen oder Vignettierungen, im Rahmen der gegebenen Möglichkeiten gut einstellen und gegebenenfalls optimieren.

Ein weiterer Vorteil des erfindungsgemäßen Systems mit nahezu parallelem Strahlengang des mindestens einen Frontlinsensystems besteht darin, dass die Basisweite (d. h. der Abstand zwischen den optischen Achsen der einzelnen Abbildungsarme im Bilderfassungsbereich) rein durch die konstruktive Ausgestaltung eines Gehäuses bestimmt wird. Dies ist insbesondere dadurch begründet, dass bei dem nahezu parallelen Strahlengang nach Passieren des mindestens einen Frontlinsensystems der Strahlenverlauf nahezu parallel ist. Insofern kann die Länge der Abbildungsarme bei ein und demselben Frontlinsensystem innerhalb eines weiten Bereiches verändert werden. Somit lassen sich Abbildungssysteme mit verschiedenen Basisweiten herstellen, so dass die Abbildungssysteme leicht modifiziert und auf verschiedene Einsatzzwecke hin angepasst werden können. Insbesondere bestimmt die Basisweite auch das Auflösungsvermögen der stereoskopischen Positionsbestimmungen, wobei insbesondere mit zunehmender Basisweite die Genauigkeit der Positionsbestimmung steigt.

Zudem bewirkt der nahezu parallele Strahlengang eine hohe Lage-Toleranz der optischen Bauteile zueinander, insbesondere der einzelnen Komponenten des mindestens einen Frontlinsensystems und des mindestens einen Abbildungslinsensystems in jedem Abbildungsarm. Auf diese Weise lassen sich stereoskopische Abbildungssysteme fertigen, deren Anforderungen an Bauteil-Toleranzen erheblich verringert sind. Somit kann das stereoskopische Abbildungssystem beispielsweise auch innerhalb eines größeren Temperaturbereichs eingesetzt werden, weil temperatur- und somit ausdehnungsbedingte Lage-Änderungen der Bauteile zueinander aufgrund von Wärmeausdehnung keine oder nur geringe Beeinträchtigungen der Abbildungsleistungen verursachen. Zudem wird aufgrund der verringerten Anforderungen an Bauteil-Toleranzen auch der Einsatz kostengünstiger (aber ungenauerer) Produktionsverfahren für die Fertigung der Bauteile möglich, beispielsweise ein Kunststoff-Spritzguss. Auch lassen sich für die Bauteile der stereoskopischen Abbildungssysteme kostengünstigere Werkstoffe, wie insbesondere Kunststoffe, einsetzen. Zudem ist nach der Fertigung in der Regel keine Justage der Komponenten mehr erforderlich. Somit lässt sich mit einfachen Mitteln eine hohe Bildqualität kostengünstig realisieren, und es lässt sich ein kostengünstiges und auch gegenüber mechanischen Erschütterungen unempfindliches stereoskopisches Abbildungssystem herstellen.

Insbesondere macht es sich vorteilhaft bemerkbar, wenn die Lagetoleranz des Bildsensors und der Bereich scharfer Abbildung aufeinander abgestimmt werden, derart, dass der Bildsensor immer in einem Bereich scharfer Abbildung zu liegen kommt. So kann bei bekannter Lagetoleranz des Bildsensors (beispielsweise einer produktionsbedingten Toleranz der Montage des Bildsensors) die Schärfentiefe der Abbildung durch die Linsensysteme derart ausgestaltet werden, dass der Bereich scharfer Abbildung stets größer ist als die Lagetoleranz des Bildsensors. Insbesondere können die Abbildungslinsensysteme derart ausgestaltet werden, dass ein möglichst großer Bereich scharfer Abbildung auftritt. Gerade bei stereoskopischen Abbildungssystemen ist dies von Vorteil, da nicht immer konstruktiv gewährleistet werden kann, dass von den Abbildungsarmen produzierte Teilbilder dieselbe Abbildungsebene aufweisen. Die Teilbilder können gegeneinander verschoben oder verkippt sein. Durch die Maximierung des Bereiches scharfer Abbildung ist jedoch gewährleistet, dass stets eine scharfe Abbildung aus allen Abbildungsarmen auf dem Bildsensor erfolgt.

Weiterhin wird ein stereoskopisches Objekterkennungssystem vorgeschlagen, welches mindestens ein stereoskopisches Abbildungssystem gemäß der Erfmdung umfasst sowie weiterhin mindestens eine Auswertungsvorrichtung. Diese Auswertungsvorrichtung ist ausgestaltet, um Objekte durch Auswertung der Bilddaten des mindestens einen Bildsensors des stereoskopischen Abbildungssystems zu erkennen und/oder die Position dieser Objekte zu bestimmen. Unter einer "Position" kann dabei sinngemäß eine Lage und/oder Ausrichtung in einem dreidimensionalen Koordinatensystem verstanden werden, oder es kann auch beispielsweise ein einfacher Abstand bestimmt werden.

Vorteilhafte Ausgestaltungen des erfindungsgemäßen stereoskopischen Abbildungssystems sowie des stereoskopischen Objekterkennungssystems ergeben sich aus den Unteransprüchen, welche hiermit zum Inhalt der Beschreibung gemacht werden. Die Merkmale dieser Unteransprüche können einzeln oder für sich verwirklicht sein. Diese Merkmale der vorteilhaften Ausgestaltungen und Weiterentwicklungen der Erfindung werden im Folgenden anhand der Ausführungsbeispiele beschrieben.

### Zeichnung

Anhand der Zeichnung wird die Erfindung nachstehend näher erläutert.

Es zeigt:
- Figur 1: ein stereoskopisches Objekterkennungssystem in einer Prinzipdarstellung;
- Figur 2: ein bevorzugtes Ausführungsbeispiel eines stereoskopischen Abbildungssystems mit einem Gehäuse;
- Figur 3: ein erfindungsgemäßes stereoskopisches Abbildungssystem mit zwei Stereoabbildungsarmen und einem zusätzlichen, dritten Abbildungsarm;
- Figur 4: ein stereoskopisches Abbildungssystem mit jeweils einem Shuttersystem in jedem Abbildungsarm;
- Figuren 5A bis 5C: Prinzipdarstellungen der Verwendung mehrerer Linsen und/oder Linsenarrays;
- Figuren 6A bis 6C: Prinzipdarstellungen der Verwendung von Spiegeln oder anderen Systemkomponenten mit wellenlängensensitiven Eigenschaften oder verbesserten Reflexionseigenschaften;
- Figur 7: ein stereoskopisches Abbildungssystem mit einem monolithischen Lichtwellenleiter; und
- Figur 7A: eine Prinzipdarstellung des Strahlenverlaufs in einem Abbildungsarm der Anordnung gemäß Figur 7.

### Ausführungsbeispiele

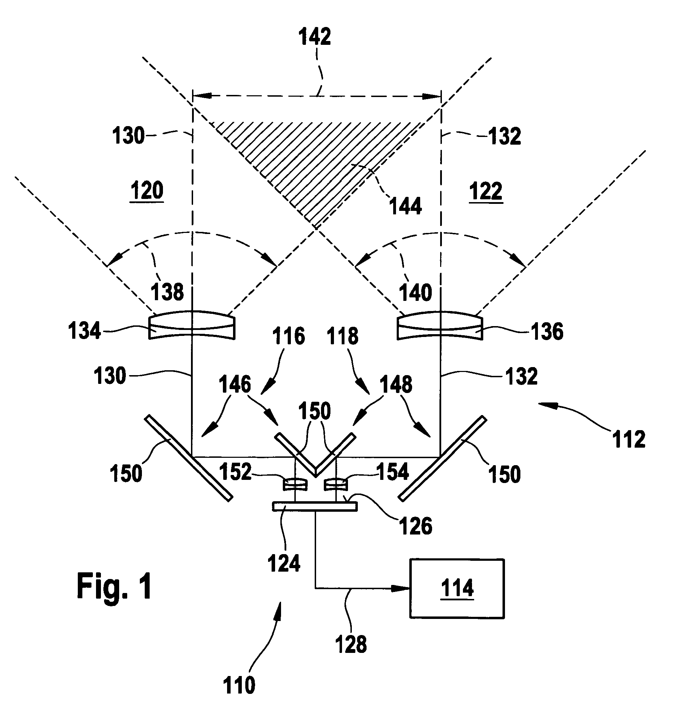

In Figur 1 ist ein stereoskopisches Objekterkennungssystem mit einem schematischen Verlauf der Strahlengänge dargestellt. Das stereoskopische Objekterkennungssystem 110 umfasst ein stereoskopisches Abbildungssystem 112 sowie eine Auswertungsvorrichtung 114. Das stereoskopische Abbildungssystem 112 umfasst in diesem Ausführungsbeispiel zwei Abbildungsarme 116, 118. Beide Abbildungsarme 116, 118 sind als Stereoabbildungsarme ausgestaltet und dienen dazu, Strahlen aus Bilderfassungsbereichen 120, 122 auf einen Bildsensor 124 mit einer Sensoroberfläche 126 abzubilden. Der Bildsensor 124 kann beispielsweise als CCD- oder CMOS-Chip ausgestaltet sein, welcher Bilddaten aufnimmt und über eine Datenleitung 128 an die Auswertungsvorrichtung 114 liefert. Die optischen Achsen in beiden Abbildungsarmen 116, 118 sind in Figur 1 symbolisch mit den Bezugsziffern 130, 132 gekennzeichnet.

In jedem der Abbildungsarme 116, 118 ist jeweils ein Frontlinsensystem 134, 136 vorgesehen, welches jeweils mindestens eine Linse aufweist. Die exakte Ausgestaltung dieser Frontlinsensysteme 134 hängt vom Aufbau und Einsatzzweck des stereoskopischen Abbildungssystems 112 ab und kann beispielsweise mit handelsüblichen Optik-Designprogrammen berechnet werden. Auf diese Weise ist bei gegebenem Anwendungszweck, gegebenem Öffnungswinkel (in Figur 1 mit den Bezugsziffern 138, 140 bezeichnet) jeweils ein Frontlinsensystem 134, 136 für den Fachmann erzeugbar, welches einen bildseitig nahezu parallelen Strahlengang aufweist.

Die Frontlinsensysteme 134, 136 sind dabei räumlich voneinander getrennt angeordnet, so dass zwischen den optischen Achsen 130, 132 in den Bilderfassungsbereichen 120, 122 eine Basisweite 142 als Abstand besteht. Dabei wird davon ausgegangen, dass in den Bilderfassungsbereichen 120, 122 die optischen Achsen 130, 132 näherungsweise parallel verlaufen. Es können jedoch auch stereoskopische Abbildungssysteme 112 eingesetzt werden, bei welchen diese optischen Achsen 130, 132 beispielsweise zueinander geneigt sind, beispielsweise bei der stereoskopischen Objekterkennung von Objekten in kurzem Abstand vor dem stereoskopischen Abbildungssystem 112. In diesem Fall wäre die Basisweite 142 beispielsweise unmittelbar an den Frontlinsensystemen 134, 136 zu ermitteln.

Die Bilderfassungsbereiche 120, 122 haben jeweils Öffnungswinkel 138, 140 (typischerweise ca. 90°) und überlappen vor dem stereoskopischen Abbildungssystem 112 innerhalb eines Überlappungsbereiches 144. Dies ist der Bereich, innerhalb dessen mittels stereoskopischer Bilderkennung und beispielsweise Triangulationsverfahren aus den bekannten optischen Eigenschaften des stereoskopischen Abbildungssystems 112 und der Geometrie der Anordnung eine Positionsbestimmung von Objekten durchgeführt werden kann, wozu beispielsweise die Auswertungsvorrichtung 114 entsprechende Bildverarbeitungsalgorithmen (z. B. in Form entsprechender Software) aufweist.

Weiterhin weist das stereoskopische Abbildungssystem 112 in jedem der Abbildungsarme 116, 118 jeweils ein Spiegelsystem 146, 148 auf. Die Spiegelsysteme 146, 148 weisen ihrerseits mehrere Umlenkspiegel 150 auf. Weiterhin ist im Strahlengang, anschließend an das Spiegelsystem 146, 148, in jedem der Abbildungsarme 116, 118 jeweils ein Abbildungslinsensystem 152, 154 vorgesehen. Diese Abbildungslinsensysteme 152, 154 dienen dazu, den von den Frontlinsensystemen 134, 136 erzeugten nahezu parallelen Verlauf der Strahlen aus den Bilderfassungsbereichen 120, 122 auf den Bildsensor 124 abzubilden. Eine Besonderheit des dargestellten stereoskopischen Abbildungssystems 112 besteht dabei darin, dass mehrere Bilder in diesem Ausführungsbeispiel auf genau einen Bildsensor 124 abgebildet werden. Auf diese Weise lassen sich erhebliche Kosten einsparen.

Die Aufgabe der Frontlinsensysteme 134, 136 besteht darin, den bildseitig nahezu parallelen Strahlenverlauf in die gewünschten Bilderfassungsbereiche 120, 122 aufzuweiten. Durch den nahezu parallelen Strahlengang im Inneren der Abbildungsarme 116, 118 ergeben sich, wie oben dargestellt, deutliche Vorteile für die Fokussierung der Optiken, insbesondere für die Anordnung der Abbildungslinsensysteme 152, 154 sowie des Bildsensors 124 und für die Anordnung und Ausrichtung der Umlenkspiegel 150. Die Linsen der Linsensysteme 134, 136, 152, 154 können dabei als refraktive (brechende) oder als diffraktive (beugende) optische Elemente oder als so genannte Fresnel-Linsen oder als Kombination derartiger Elemente ausgeführt sein. Durch den toleranzarmen Aufbau mit bildseitig nahezu parallelem Strahlengang kann auf eine Fokussierung der Optiken verzichtet werden. Weiterhin können die Linsen der Linsensysteme 134, 136, 152, 154 ganz oder teilweise aus kostengünstigen Materialien, wie beispielsweise Kunststoff, gefertigt sein. Zu diesem Zweck lassen sich beispielsweise transparente Kunststoffe, wie z. B. Polycarbonate, einsetzen. Als Fertigungsverfahren bieten sich in diesem Fall beispielsweise Spritzgieß- oder Spritzprägeverfahren an, wobei es auch möglich ist, mehrere optische Elemente in nur einem Fertigungsvorgang herzustellen. Dadurch lassen sich erhebliche Kosten einsparen, und es lässt sich eine gute Homogenität der optischen Eigenschaften der in einem Vorgang gefertigten Elemente erzielen.

Für viele Anwendungen kann es von entscheidender Bedeutung sein, dass insbesondere die Frontlinsensysteme 134, 136 besonders ausgestaltet sind. Je nach Anwendung können sich somit unter Umständen erhöhte Anforderungen bezüglich des Erscheinungsbildes, der Kratzfestigkeit und/oder der Stoßzähigkeit ergeben. Dementsprechend lassen sich beispielsweise besonders kratzfeste Materialien einsetzen, wobei Polycarbonat in seinen Eigenschaften wiederum gut geeignet ist. Alternativ oder zusätzlich lassen sich auch zusätzliche Beschichtungen aufbringen, welche die Kratzfestigkeit zusätzlich erhöhen. Auch kann das optische Erscheinungsbild der Linsensysteme 134, 136, 152, 154 geändert werden. So lassen sich den Linsen beispielsweise Farbstoffe beimengen, was wiederum besonders einfach im Fall einer Verwendung von Kunststoffen zu realisieren ist. So lassen sich beispielsweise Einfärbungen erzielen, insbesondere Einfärbungen in den Frontlinsensystemen 134, 136, welche beispielsweise der Farbe des Innenraums eines Kraftfahrzeugs angepasst sind. Weiterhin lassen sich durch gezielte Beimengung bestimmter Farbstoffe zum Werkstoff das Eindringen von Licht unerwünschter Wellenlängen in das stereoskopische Abbildungssystem 112 verhindern. Beispielsweise können Farbstoffe eingesetzt werden, welche zwar sichtbares Licht ganz oder teilweise absorbieren oder nicht durchlassen, welche jedoch im infraroten Spektralbereich zumindest teilweise durchlässig sind. Viele Bildsensoren 124 sind gerade im infraroten Spektralbereich besonders empfindlich.

Auf diese Weise lässt sich eine Verbesserung des Verhältnisses von Nutz- zu Störsignalen erzielen. Zudem lassen sich designerische Vorteile erzeugen, da die Frontlinsensysteme 134, 136 nun durch geschickte Farbwahl nicht mehr als optische Elemente erkannt werden. Insbesondere bei Anwendungen zur Personenerfassung ist dies von Vorteil, da bei einer ständigen Beobachtung durch Kamerasysteme häufig ein subjektives Unbehagen der beobachteten Personen auftritt. Zudem lässt sich der Farbton der Frontlinsensysteme 134, 136 leicht in das Design der Anwendungsumgebung, z. B. den Fahrzeuginnenraum, integrieren. Die Verwendung von infrarot-selektiven Farbstoffen ist insbesondere dann von Vorteil, wenn die Anwendung eine nicht vom Menschen wahrnehmbare künstliche Beleuchtung erfordert.

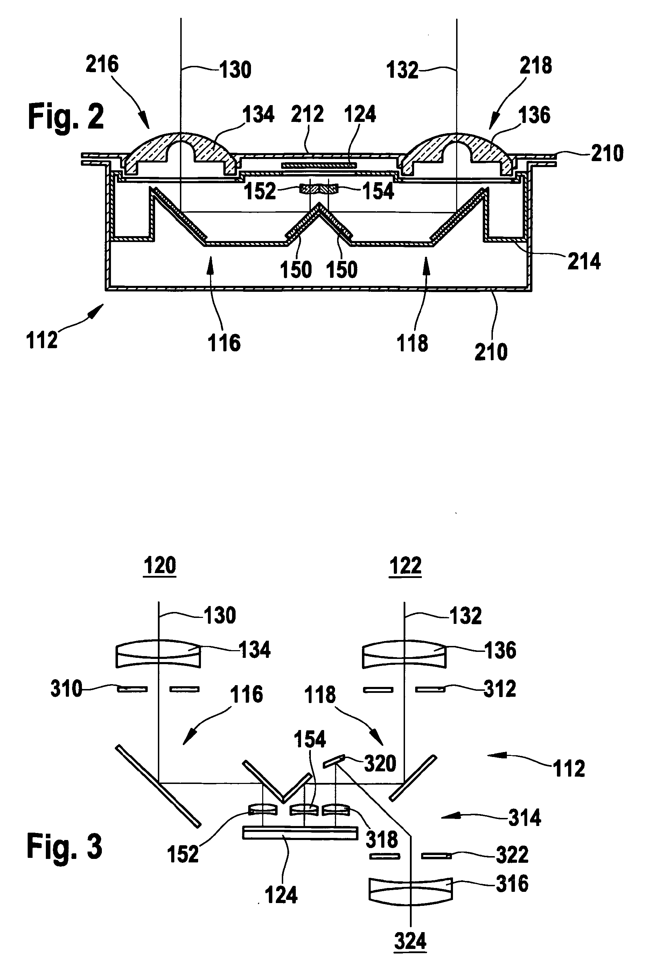

In Figur 2 ist eine konstruktive Ausgestaltung des stereoskopischen Abbildungssystems 112 dargestellt. Grundsätzlich entspricht der Strahlenverlauf in den Abbildungsarmen 116, 118 dem Strahlenverlauf im Ausführungsbeispiel gemäß Figur 1. Hierbei ist jedoch zu bemerken, dass die dem Bildsensor 124 am nächsten liegenden Umlenkspiegel 150 eine zur Ausgestaltung gemäß Figur 1 spiegelsymmetrische Anordnung haben, so dass durch die Frontlinsensysteme 134, 136 eintretende Lichtstrahlen nunmehr nicht, wie in Figur 1, nach unten reflektiert werden, sondern nach oben. Insofern weist der Strahlengang in Figur 1 einen "S-förmigen" Verlauf auf, wohingegen der Strahlenverlauf in Figur 2 einen "U-förmigen" Verlauf aufweist. Dies ist insbesondere dann von Vorteil, wenn, wie in Figur 2, das stereoskopische Abbildungssystem 112 ein Gehäuse 210 mit Eintrittsöffnungen 216, 218 aufweist. Dieses Gehäuse 210 weist seinerseits eine Fahrgastinnenraumseite 212 auf, in welche die Frontlinsensysteme 134, 136 integriert sind und welche beim Einsatz in einem Kraftfahrzeug dem Fahrgastinnenraum zuweist. Dabei ist der Bildsensor 124 thermisch mit der Fahrgastinnenraumseite 212 des Gehäuses 210 gekoppelt, was beispielsweise durch eine thermische Anbindung über thermische Leiter (z. B. Metalle oder Wärmeleitpaste) oder einfach durch eine Anordnung in unmittelbarer Nähe der Fahrgastinnenraumseite 212 realisiert werden kann. Üblicherweise nimmt die Leistung von Bildsensoren 124 mit steigender Temperatur deutlich ab. Heute verfügbare Bildsensoren 124 sind üblicherweise nur mit Einschränkungen in der Lage, in dem von Automobilherstellern geforderten Temperaturbereich (z. B. -40°C bis 125°C) zu arbeiten. Die Wärmeableitung vom Bildsensor 124 stellt somit zurzeit eine Schlüsseltechnologie zum Einsatz von Bildsensoren 124 im Fahrzeuginnenraum dar. Durch den in Figur 2 beschriebenen Aufbau des stereoskopischen Abbildungssystems 112 ist es jedoch möglich, den wärmeempfindlichen Bildsensor 124 am in der Regel klimatisierten Fahrzeuginnenraum zu kühlen. Diese Anordnung ist insbesondere dann von Vorteil, wenn das stereoskopische Abbildungssystem 112 an einem Einsatzort im Kraftfahrzeug eingesetzt wird, bei welchem keine andere Möglichkeit der Wärmeableitung besteht, wie z. B. im Dachhimmel eines Fahrzeuges. Alternativ oder zusätzlich können auch noch zusätzliche Maßnahmen zur Kühlung des Bildsensors 124 herangezogen werden, wie z. B. Kühlkörper, welche wiederum ihrerseits beispielsweise am in der Regel klimatisierten Fahrzeuginnenraum gekühlt werden können.

Die Frontlinsensysteme 134, 136 in der Ausgestaltung gemäß Figur 2 sind derart ausgeformt, dass diese gleichzeitig Linsen- und Blendenfunktionen (durch laterale räumliche Begrenzung) aufweisen. Weiterhin weist das stereoskopische Abbildungssystem 112 in der Ausgestaltung gemäß Figur 2 ein in das Gehäuse 210 eingelassenes Lichtwellenleitergehäuse 214 auf. Dieses Lichtwellenleitergehäuse 214 kann beispielsweise mit dem Gehäuse 210 verklebt oder auf andere Weise in diesem befestigt werden. Die Umlenkspiegel 150 können beispielsweise auf abgeschrägte Flächen des Lichtwellenleitergehäuses 214 aufgebracht werden, beispielsweise durch Aufkleben separater Spiegel oder auch durch Aufdampfen von Spiegelflächen, wie beispielsweise metallischer oder dielektrischer Spiegelflächen. Auch andere Aufbringtechniken können eingesetzt werden, wie beispielsweise Sputtern oder eine nasschemische Aufbringung. Auch die Abbildungslinsensysteme 152, 154 können mit dem Lichtwellenleitergehäuse 214 verbunden sein, beispielsweise wiederum durch Verkleben. Auf diese Weise lassen sich die einzelnen Komponenten des stereoskopischen Abbildungssystems 112 gemäß der Ausgestaltung in Figur 2 einfach zueinander justieren, wobei aufgrund des bildseitigen nahezu parallelen Strahlengangs der Frontlinsensysteme 134, 136 auch höhere Bauteil-Toleranzen und somit kostengünstigere Fertigungsverfahren eingesetzt werden können.

In Figur 3 ist ein Ausführungsbeispiel des erfindungsgemäßen stereoskopischen Abbildungssystems 112 dargestellt, bei welchem mehr als zwei Abbildungsarme vorgesehen sind. Zunächst ist das dargestellte stereoskopische Abbildungssystem 112 grundsätzlich aufgebaut wie das in Figur 1 dargestellte Ausführungsbeispiel und weist zwei als Stereoabbildungsarme ausgestaltete Abbildungsarme 116, 118 auf. Zusätzlich zu der Darstellung in Figur 1 weisen die Abbildungsarme 116, 118 noch Blenden 310, 312 auf, welche in Figur 1 nicht explizit dargestellt sind.

Zusätzlich zu den beiden Abbildungsarmen 116, 118, deren optische Achsen 130, 132 in den Bilderfassungsbereichen 120, 122 einen im Wesentlichen parallelen Strahlenverlauf aufweisen, ist noch ein dritter Abbildungsarm 314 vorgesehen. Dieser dritte Abbildungsarm 314 verfügt, wie auch die Abbildungsarme 116, 118, über ein Frontlinsensystem 316 und ein Abbildungslinsensystem 318 sowie über ein dazwischen liegendes Spiegelsystem 320 (nur teilweise dargestellt) sowie eine Blende 322. In diesem Ausführungsbeispiel gemäß Figur 3 ist also der dritte Abbildungsarm 314 grundsätzlich genauso ausgestaltet wie die beiden stereoskopischen Abbildungsarme 116, 118. Alternativ kann hier auch eine andere Ausgestaltung vorgesehen sein, beispielsweise eine Ausgestaltung mit lediglich einem Linsensystem, je nach Anforderungen und Einsatzzweck des dritten Abbildungsarms 314.

Der dritte Abbildungsarm 314 bildet einen dritten Bilderfassungsbereich 324 auf einen eigenen Bildbereich auf dem Bildsensor 124 ab. Somit können gleichzeitig mit einem Kamerasystem und einem Bildsensor 124 mehrere Messaufgaben wahrgenommen werden. Dies ist von erheblichem Vorteil, da zum einen Kamerasysteme aufwändig und teuer sind. Zum anderen lassen sich auf diese Weise auch einfach auf einem Display für einen Fahrer mehrere Bildinformationen darstellen. Beispielsweise können die beiden stereoskopischen Abbildungsarme 116, 118 zur Positionsbestimmung von Kraftfahrzeuginsassen gemäß der obigen Beschreibung herangezogen werden, um so beispielsweise ein Sicherheitssystem zu steuern. Der dritte Abbildungsarm 314 kann zusätzliche Aufgaben übernehmen, beispielsweise eine Außenraumbeobachtung, eine Abstandsmessung zu einem vorausfahrenden Fahrzeug, oder auch Aufgaben im Innenraum des Fahrzeugs, wie beispielsweise die Überwachung eines Kindersitzes. Auch andere Einsatzmöglichkeiten sind denkbar.

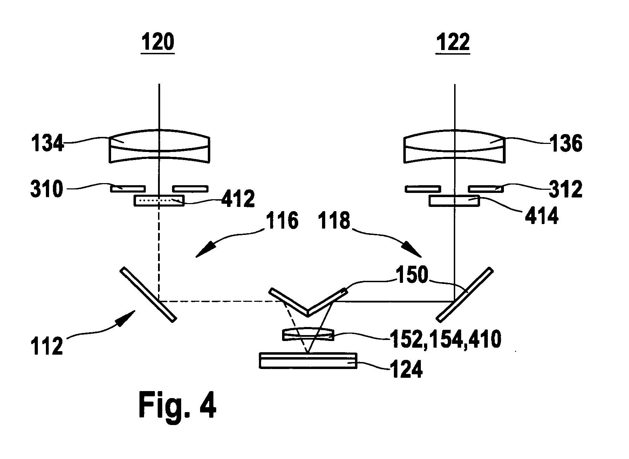

In Figur 4 ist ein weiteres Ausführungsbeispiel eines stereoskopischen Abbildungssystems 112 vorgesehen, welches ein Multiplexing-Verfahren ermöglicht. Das stereoskopische Abbildungssystem 112 weist wiederum, analog zur Darstellung gemäß Figur 1, zwei Abbildungsarme 116, 118 auf. Wiederum weisen diese Abbildungsarme 116, 118 Frontlinsensysteme 134, 136 und Abbildungslinsensysteme 152, 154 auf. Die Besonderheit an dieser Ausgestaltung besteht jedoch darin, dass die Abbildungslinsensysteme 152, 154 der beiden Abbildungsarme 116, 118 zu einem einzelnen Abbildungslinsensystem 410 zusammengefasst sind. Dieses zusammengefasste Abbildungslinsensystem 410 ist ausgestaltet, um Lichtstrahlen aus den Bilderfassungsbereichen 120, 122 der Abbildungsarme 116, 118 auf einen gemeinsamen Bildbereich des Bildsensors 124 abzubilden. Die Bilder, welche der Bildsensor 124 aufnimmt, sind somit einander überlagert.

Um die überlagerten Bilder voneinander zu trennen, ist in jedem der Abbildungsarme 116, 118 ein Shuttersystem 412, 414 vorgesehen. Diese Shuttersysteme 412, 414 können derart angesteuert werden, dass der Strahlengang in dem jeweiligen Abbildungsarm 116, 118 durch das Shuttersystem 412, 414 unterbrochen werden kann. In der Darstellung gemäß Figur 4 ist im linken Abbildungsarm 116 das Shuttersystem 412 auf undurchlässig geschaltet, so dass der weitere Strahlenverlauf der aus dem Bilderfassungsbereich 120 in das stereoskopische Abbildungssystem 112 eintretenden Strahlen blockiert wird. Das Shuttersystem 414 im rechten Abbildungsarm 118 ist hingegen auf durchlässig geschaltet. Weiterhin sind die Shuttersysteme 412, 414 mit Blenden 310, 312 versehen, um Randeffekte zu vermeiden. Die Shuttersysteme 412, 414 können auf verschiedene Weise ausgestaltet sein. Beispielsweise können diese Flüssigkristall-Shutter aufweisen oder auch mechanische Shutter, wie beispielsweise Shuttersysteme, welche in Fotokameras eingesetzt werden.

Das dargestellte stereoskopische Abbildungssystem 112 lässt sich auf verschiedene Weise einsetzen. Darüber hinaus können auch weitere Abbildungsarme, wie beispielsweise der dritte Abbildungsarm 314 gemäß der Darstellung in Figur 3, vorgesehen sein, welche alternativ oder zusätzlich mit Shuttersystemen ausgestattet sein können. Somit können beispielsweise mittels der Shuttersysteme 412, 414 die einzelnen Abbildungsarme 116, 118 "umgeschaltet" werden, beispielsweise um verschiedene Messaufgaben zu erfüllen. So kann beispielsweise von einer Innenraumbeobachtung auf die Beobachtung eines Kindersitzes oder eines Außenraumes umgeschaltet werden.

Die Vorteile der in Figur 4 dargestellten Anordnung bestehen insbesondere darin, dass der gesamte sensitive Bereich des Bildsensors 124 für die Bildaufnahme genutzt werden kann. Es entstehen somit keine "toten" Bereiche. Für jedes der beiden Bilder kann somit der volle Bildbereich des Bildsensors 124 genutzt werden, und es steht die gesamte Auflösung zur Verfügung. Damit ergibt sich eine höhere örtliche Auflösung der einzelnen Bilder. Zudem tritt kein Übersprechen zwischen den einzelnen Bildbereichen der einzelnen Abbildungsarme 116, 118 auf, wie es beispielsweise in der Darstellung gemäß Figur 1 der Fall sein kann.

Weiterhin kann auch ein (nicht dargestelltes) Ansteuerungssystem zur elektrischen Ansteuerung der Shuttersysteme 412, 414 vorgesehen sein, welches insbesondere die zeitliche Abfolge der Ansteuerungen dieser Shuttersysteme 412, 414 steuert. Auf diese Weise lässt sich beispielsweise ein Multiplexing-Verfahren einsetzen, bei welchem die Shuttersysteme 412, 414 gegenphasig geschaltet werden. Auf diese Weise ist jeweils immer einer der Abbildungsarme 116, 118 auf durchlässig geschaltet, wohingegen der jeweils andere dieser Abbildungsarme 118, 116 nicht benutzt wird. Eine Auswertungsvorrichtung 114 (wobei es sich beispielsweise um dieselbe Auswertungsvorrichtung 114 wie in Figur 1 handeln kann oder auch eine getrennte Auswertungsvorrichtung) ermittelt dann unter Berücksichtigung der zeitlichen Abfolge der Ansteuerungen der Shuttersysteme 412, 414 die dreidimensionalen Bildinformationen.

Ein weiterer Vorteil der Anordnung gemäß Figur 4 besteht darin, dass kleinere Bildsensoren 124 eingesetzt werden können, ohne dass die Bildqualität der einzelnen Abbildungen verringert wird. Dies ist insbesondere dann von Vorteil, wenn hochwertige oder spezielle Bildsensoren eingesetzt werden, wie z. B. Bildsensoren für Wärmebildkameras. Auf diese Weise lässt sich durch die Anordnung gemäß Figur 4 eine erhebliche Kostenreduzierung erreichen.

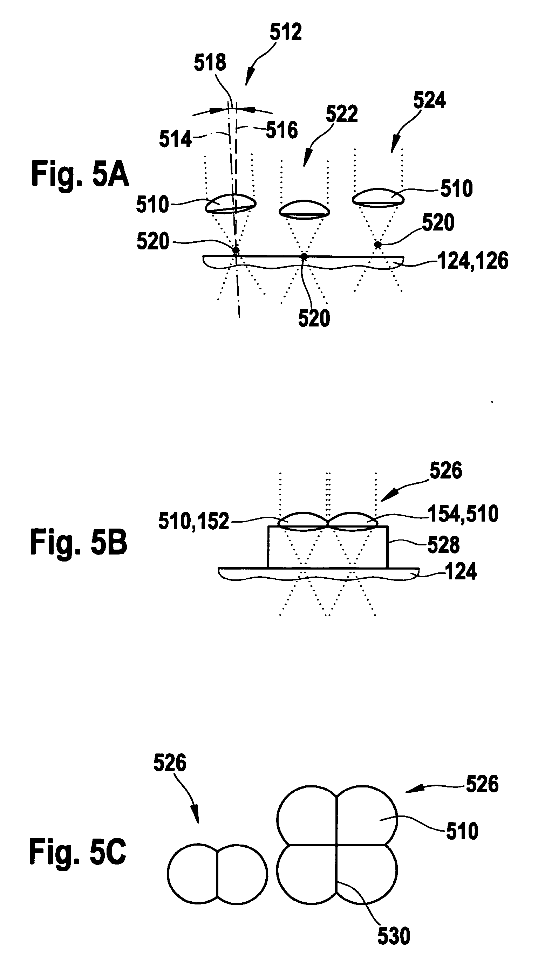

In Figur 5A ist schematisch die Problematik der Justage von Linsen 510 dargestellt, welche sich bei der Konstruktion von stereoskopischen Abbildungssystemen 112 bemerkbar machen kann. Dabei kann es sich bei den Linsen 510 um einzelne Linsen oder auch um ganze Linsengruppen handeln. Insbesondere sei im Folgenden angenommen, dass es sich bei den Linsen 510 um eines der Abbildungslinsensysteme 152, 154 handelt. Gleichzeitig ist der Bildsensor 124 symbolisch dargestellt.

Für eine korrekte Abbildung der Lichtstrahlen ist es notwendig, einen genau definierten Abstand zwischen den Linsen 510 und dem Bildsensor 124 einzuhalten. Zudem können, insbesondere wenn die Linsen 510 als Linsengruppen ausgeführt sind, unscharfe Abbildungen durch Lage- und/oder Winkeltoleranzen entstehen. Mit Bezugsziffer 512 ist dabei eine Situation dargestellt, in welcher eine Verkippung (Winkelfehler) und gleichzeitig eine Fehlfokussierung auftritt. Dabei tritt ein von 0 verschiedener Winkel zwischen der optischen Achse 514 der linken Linse 510 und der Lotrechten 516 zum Bildsensor 124 auf (Verkippungswinkel in Figur 5A symbolisch mit 516 bezeichnet). Weiterhin liegt bei der linken Linse 510 der Brennpunkt 520 außerhalb der Sensoroberfläche 126. Dem gegenüber ist die mittlere Linse 510 optimal justiert (dieser Fall ist in Figur 5A symbolisch mit Bezugsziffer 522 gekennzeichnet). Hierbei liegt der Brennpunkt 520 in der Sensoroberfläche 126, und es tritt kein Kippungswinkel 518 auf. In dem dritten in Figur 5A dargestellten Fall (Bezugsziffer 524) ist ein reiner Fokussierungsfehler dargestellt. Bei diesem reinen Fokussierungsfehler 524 liegt der Brennpunkt 520 nicht in der Sensoroberfläche 126.

In Figur 5B ist hingegen eine Ausgestaltung dargestellt, bei welcher die beiden Abbildungslinsensysteme 152, 154 als Linsenarray 526 ausgestaltet sind. Unter einem Linsenarray 526 ist dabei eine feste mechanische Verbindung zwischen den einzelnen Abbildungslinsensystemen 152, 154 zu verstehen. Auf diese Weise ist gewährleistet, dass die Abbildungslinsensysteme 152, 154 stets gleich zueinander justiert sind, so dass das Linsenarray 526 die Aufgabe mehrerer einzelner Abbildungslinsensysteme 152, 154 übernehmen kann, ohne dass diese einzeln justiert werden müssen. Dadurch lässt sich der Justageaufwand erheblich verringern.

Besonders einfach lässt sich dieses Linsenarray 526 dadurch gestalten, dass wiederum Kunststoff als Werkstoff verwendet wird, wobei das Linsenarray 526 beispielsweise wiederum durch Spritzgießen oder Pressen in einem einzelnen Arbeitsschritt hergestellt wird. Weiterhin kann das Linsenarray 526 noch einen Distanzkörper 528 aufweisen, beispielsweise einen angespritzten Distanzkörper 528, welcher im selben Spritzgießvorgang hergestellt wird. Dieser Distanzkörper 528 kann für einen stets definierten Abstand zwischen dem Linsenarray 526 und dem Bildsensor 124 sorgen.

Alternativ oder zusätzlich zur Verwendung eines Linsenarrays 526 für die Abbildungslinsensysteme 152, 154 können auch die Frontlinsensysteme 134, 136 ähnliche Linsenarrays 526 aufweisen. Beispielsweise kann diese Linsenarray 526 dann so ausgestaltet sein, dass zwischen den einzelnen Linsen 510 ein größerer lateraler Abstand vorgesehen ist, beispielsweise durch Einfügen zusätzlicher lateraler Distanzkörper, um die erforderliche Basisweite 142 zu erzielen.

In Figur 5C sind schließlich zwei weitere Ausführungsbeispiele von Linsenarrays 526 dargestellt, in Form eines Doppel-Linsenarrays (links) und eines Vierfach-Linsenarrays (rechts). Auch andere Ausgestaltungen von Mehrfach-Linsenarrays sind denkbar. Bei diesen Ausgestaltungen gemäß Figur 5C verfügen die einzelnen Linsen 510 über aneinandergrenzende seitliche Planflächen 530.

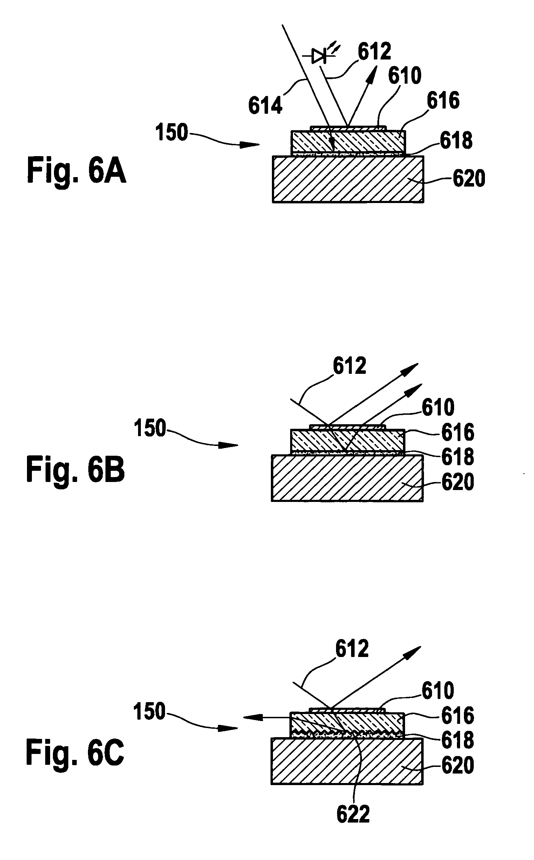

In den Figuren 6A bis 6C sind besondere Ausgestaltungen der in den vorher beschriebenen Systemen verwendeten Umlenkspiegel 150 dargestellt, welche die Eigenschaften des stereoskopischen Abbildungssystems 112 verbessern können. So ist in Figur 6A ein Ausführungsbeispiel dargestellt, bei welchem der Umlenkspiegel 150 wellenlängensensitive Reflexionseigenschaften aufweist. Derartige Ausgestaltungen sind beispielsweise bei Infrarotsystemen, beispielsweise Infrarot-Pulsmesseinrichtungen, vorteilhaft, da auf diese Weise störendes Licht unerwünschter Wellenlängen unterdrückt werden kann, so dass auf den Bildsensor 124 nur Licht einer oder mehrerer bestimmter Wellenlängen oder eines bestimmten Wellenlängenbereichs trifft. Zu diesem Zweck können die Umlenkspiegel 150 ganz oder teilweise beispielsweise die Eigenschaften eines Bandpassfilters aufweisen und/oder nur in einem bestimmten Wellenlängenbereich effizient reflektierende Eigenschaften.

So kann beispielsweise der Spiegel 510 derart ausgestaltet sein, dass dieser eine Reflexionsschicht 610 aufweist, welche genau die gewünschtenwellenlängen und/oder genau den gewünschten Wellenlängenbereich reflektiert. Dieses "erwünschte Licht" ist in Figur 6A symbolisch mit Bezugsziffer 612 gekennzeichnet. Licht anderer Wellenlängen (unerwünschte Wellenlänge, 614) kann hingegen die Reflexionsschicht 610 passieren und wird in ein Spiegelsubstrat 616 (beispielsweise Glas oder Kunststoff) eingeleitet. Beispielsweise kann diese unerwünschte Wellenlänge 614 dann von einem optionalen Klebstoff 618 oder einem Träger 620 (z. B. das Gehäuse 210) absorbiert oder anderweitig dissipiert werden.

Zur Herstellung wellenlängenselektiver Eigenschaften der Reflexionsschicht 610 des Spiegels 510 bieten sich beispielsweise bestimmte Metalle an. Alternativ oder zusätzlich können auch dielektrische Schichtenfolgen eingesetzt werden, was aus anderen Bereichen der Optik bekannt ist. Weiterhin lassen sich auch Spiegel 510 einsetzen, bei welchen das Spiegelsubstrat 616 entsprechend eingefärbt ist. Beispielsweise kann diese Einfärbung derart erfolgen, dass eingedrungenes Licht absorbiert wird. Eine weitere Möglichkeit, die Eigenschaften des Spiegels 510 zu verbessern, besteht darin, einen Klebstoff 618 mit einer an das Spiegelsubstrat 616 angepassten Brechzahl zu verwenden. Auf diese Weise lassen sich Reflexionen von Licht an der Grenzschicht zwischen dem Spiegelsubstrat 616 und dem Klebstoff 618 vermeiden oder reduzieren. Eine weitere Möglichkeit der Verbesserung der Eigenschaften des Spiegels 510 besteht darin, für den Träger 620 (beispielsweise das Gehäuse 210) einen Werkstoff einzusetzen, der auftreffendes Licht effizient absorbiert. Auf diese Weise lassen sich beispielsweise wellenlängenselektive Eigenschaften der Reflexionsschicht 610 zusätzlich verbessern und störende Reflexe oder Geisterbilder verringern.

In Figur 6B ist ein Effekt dargestellt, welcher häufig als "Geisterbild" (Ghosting) bezeichnet wird. Dabei wird der einfallende Lichtstrahl 612 nicht vollständig an der Reflexionsschicht 610 reflektiert, sondern tritt teilweise in das Spiegelsubstrat 616 ein. Dieser eingedrungene Lichtstrahl wird dann an der Grenzfläche zwischen Spiegelsubstrat 616 und Klebstoff 618 und/oder an der Grenzfläche zwischen Klebstoff 618 und Träger 620 reflektiert, um dann wieder näherungsweise in derselben Richtung wie der ursprünglich reflektierte Lichtstrahl aus dem Spiegel 510 auszutreten. Auf diese Weise entstehen für einen Betrachter zwei leicht gegeneinander versetzte Bilder.

Eine vorteilhafte Ausführung zur Vermeidung von Geisterbildern ist die Verwendung von Spiegelsubstraten 616, deren Rückseite derart strukturiert ist, dass auf die Rückseite auftreffendes Licht diffus reflektiert wird und/oder durch die Struktur so umgelenkt wird, dass es den Bildsensor 124 oder andere reflektierende Teile im Inneren des stereoskopischen Abbildungssystems 112 nicht erreicht. Diese Ausgestaltung ist in Figur 6C dargestellt. Die aufgeraute Rückseite des Spiegelsubstrats 616 ist dabei in Figur 6C mit Bezugsziffer 622 gekennzeichnet. Auf diese Weise lässt sich durch Verwendung des in Figur 6C dargestellten Spiegels 510 die Bildqualität verbessern, und es lassen sich Geisterbilder verhindern.

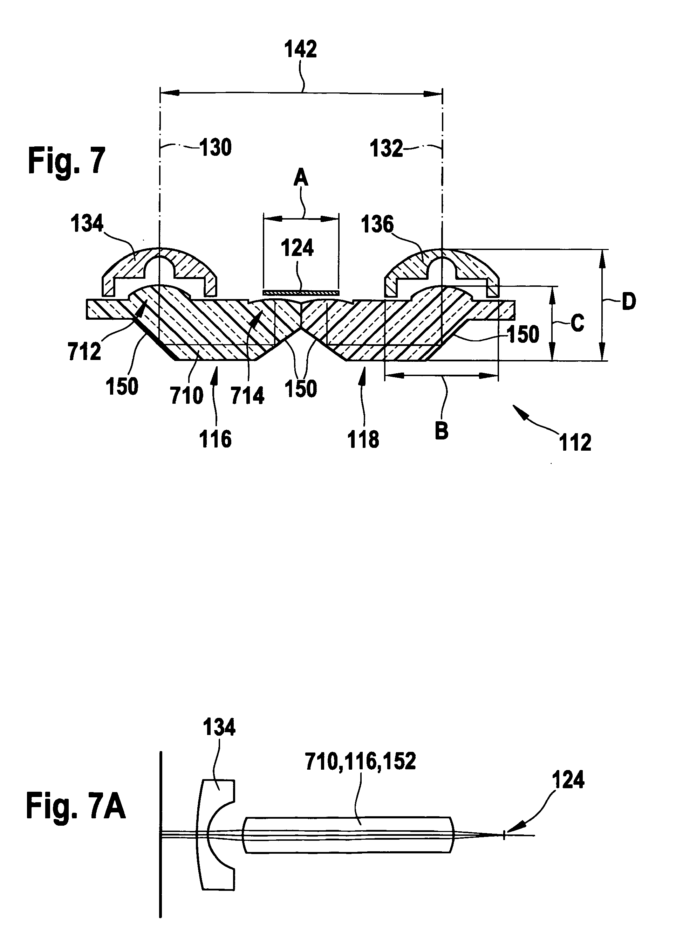

In den Figuren 7 und 7A ist schließlich eine weitere Ausgestaltung des stereoskopischen Abbildungssystems 112 dargestellt. Dabei zeigt Figur 7 den Gesamtaufbau des stereoskopischen Abbildungssystems 112 in Prinzipdarstellung, wohingegen in Figur 7A der Strahlenverlauf in einem der Abbildungsarme 116, 118 "entfaltet", also in linearer Darstellung ohne die Strahlumlenkungen, dargestellt ist. Der Aufbau und Strahlenverlauf des stereoskopischen Abbildungssystems 112 gemäß der Ausgestaltung in Figur 7 entspricht dem Ausführungsbeispiel in Figur 2. Die Besonderheit der Ausgestaltung gemäß Figur 7 besteht jedoch darin, dass ein monolithischer Lichtwellenleiter 710 vorgesehen ist. Dieser monolithische Lichtwellenleiter 710 kann beispielsweise als Spritzgussbauteil gefertigt sein und kann beispielsweise einen Kunststoff wie Polycarbonat oder ähnliche transparente Kunststoffe als Werkstoff aufweisen. Alternativ oder zusätzlich können als monolithische Lichtwellenleiter 710 auch flexible Lichtwellenleiter eingesetzt werden. Der spritzgegossene monolithische Lichtwellenleiter 710 kann für beide Abbildungsarme 116, 118 einstückig ausgebildet sein, oder es können auch verschiedene monolithische Lichtwellenleiter 710 eingesetzt werden. Der erste Fall beinhaltet den Vorteil, dass eine Justage der Abbildungsarme 116, 118 zueinander entfällt.

Der monolithische Lichtwellenleiter 710, welcher, wie beschrieben, als Kunststoffvollkörper ausgeführt sein kann, kann gleichzeitig als optisches und mechanisches Bauteil dienen und kann beispielsweise über Halterungen für die Frontlinsensysteme 134, 136 verfügen sowie über Halterungen für den Bildsensor 124 (Halterungen in Figur 7 nicht dargestellt). Der Strahlengang in einem der Abbildungsarme 116 ist in Figur 7A symbolisch "entfaltet", d. h. ohne Strahlumlenkungen, dargestellt. Dabei wird deutlich, dass die Anordnung gemäß Figur 7 wiederum eine Zwei-Linsensysteme-Anordnung darstellt: Zum einen ist das Frontlinsensystem 134 vorgesehen, und zum anderen wirkt der monolithische Lichtwellenleiter 710, welcher über angespritzte Halblinsen 712, 714 verfügt, als Abbildungslinsensystem 152. Somit entspricht der monolithische Lichtwellenleiter 710 für jeden der Abbildungsarme 116, 118 einer "langen" Linse in einem klassischen Optikaufbau.

Die Umlenkspiegel 150 können dabei auf verschiedene Weisen ausgestaltet sein. Zum einen kann es sich dabei auf Randflächen des monolithischen Lichtwellenleiters 710 aufgedampfte oder aufgesputterte Metallschichten oder dielektrische Schichten handeln, welche reflektierend wirken. Alternativ oder zusätzlich können die Spiegel auch dadurch ausgestaltet sein, dass die Grenzflächen zwischen dem Kunststoff des monolithischen Lichtwellenleiters 710 und der umgebenden Luft durch Totalreflexion Spiegelaufgaben erfüllen. Ein Vorteil der letzteren Ausgestaltung ist die Einsparung von Umlenkspiegeln 150. Letzteres macht insbesondere auch deutlich, dass die oben beschriebene Reihenfolge Frontlinsensystem 134 - Spiegelsystem 146 - Abbildungslinsensystem 152 nicht in striktem Sinne zu sehen ist. So ist, wie aus Figur 7 hervorgeht, das Abbildungslinsensystem 152, welches aus den beiden Halblinsen 712 und 714 besteht, räumlich aufgeteilt, wobei die Umlenkspiegel 150 zwischen diesen beiden Halblinsen 712, 714 angeordnet sind. Dabei ist jedoch die zweite Halblinse 714 unmittelbar vor dem Bildsensor 124 angeordnet.

Das stereoskopische Abbildungssystem 112 gemäß der Ausgestaltung in Figur 7 lässt sich besonders kompakt ausgestalten. So kann beispielsweise die Sensorfläche des Bildsensors 124 eine Fläche A von 1,5 x 1,5 mm² aufweisen. Die Basisweite 142 kann beispielsweise 40 mm betragen. Der Durchmesser B der Frontlinsensysteme 134, 136 kann beispielsweise 20 mm betragen. Die in Figur 7 dargestellten Höhen C und D können beispielsweise 20 mm bzw. 35 mm betragen. Die dargestellte Ausführungsform mit dem monolithischen Lichtwellenleiter 710 fuhrt somit zu einem besonders kompakten und kostengünstigen Design. Es lassen sich, wie beschrieben, zusätzliche Umlenkspiegel 150 einsparen, und insbesondere das Abbildungslinsensystem 152, 154 lässt sich in den monolithischen Lichtwellenleiter 710 integrieren, wodurch zusätzliche Linsen eingespart werden können.

Abschließend sei darauf hingewiesen, dass, unabhängig von der hier beanspruchten Erfmdung, die in den Unteransprüchen beanspruchten Detailverbesserungen bezüglich der Werkstoffe (insbesondere der Verwendung von Kunststoffen und Einfärbungen), der Linsenarrays (526), der Verwendung von mehr als zwei Abbildungsarmen (116, 118, 314), der wellenlängenselektiven Spiegel (510) oder Ghosting-unterdrückten Spiegel (510), der monolithischen Lichtwellenleiter (710), der Kühlung des Bildsensors (124) an der Fahrgastinnenraumseite (212) und der Verwendung von Shuttersystemen (412, 414) auch ohne die Merkmale des Hauptanspruchs, also auch ohne Verwendung von Frontlinsensystemen (134, 136, 316) mit bildseitig nahezu parallelem Strahlengang, verwirklichbar sind. In diesem Fall ergeben sich zwar nicht die erfindungsgemäß erzielten Vorteile des bildseitig nahezu parallelen Strahlengangs, und es lassen sich die Vorteile der Detailverbesserungen auch nicht in vollem Umfang ausschöpfen, es lassen sich jedoch die beschriebenen Vorteile der einzelnen Verbesserungen einzeln oder in Kombination zumindest teilweise verwirklichen.

## Patentansprüche

1. Stereoskopisches Abbildungssystem (112), umfassend mindestens einen Bildsensor (124) zur Aufnahme von Bilddaten und mindestens zwei Abbildungsarme (116, 118, 314), wobei jeder der mindestens zwei Abbildungsarme (116, 118, 314) mindestens ein Frontlinsensystem (134, 136, 316) und mindestens ein Abbildungslinsensystem (152, 154, 318) umfasst sowie jeweils weiterhin mindestens ein Spiegelsystem (146, 148) zur Umlenkung eines Strahlenganges von durch das mindestens eine Frontlinsensystem (134, 136, 316) eintretenden Lichtstrahlen auf den mindestens einen Bildsensor (124) und wobei das mindestens eine Frontlinsensystem (134, 136, 316) in mindestens einem der Abbildungsarme (116, 118, 314), vorzugsweise jedem der Abbildungsarme (116, 118, 314), nahezu parallele Strahlengänge aufweist, **dadurch gekennzeichnet, dass** das stereoskopische Abbildungssystem (112) mindestens drei Abbildungsarme (116, 118, 314) umfasst, wobei mindestens zwei der Abbildungsarme (116, 118) Stereoabbildungsarme mit zumindest teilweise überlappenden Bilderfassungsbereichen (120, 122) sind und wobei mindestens ein dritter Abbildungsarm (314) einen von den mindestens zwei Stereoabbildungsarmen (116, 118) verschiedenen Bilderfassungsbereich (324) aufweist.

2. Stereoskopisches Abbildungssystem (112) gemäß dem vorhergehenden Anspruch, **dadurch gekennzeichnet, dass** mindestens eine Linse mindestens eines Frontlinsensystems (134, 136, 316) und/oder mindestens eines Abbildungslinsensystems (152, 154, 318) aus Kunststoff, vorzugsweise aus Polycarbonat, gefertigt ist.

3. Stereoskopisches Abbildungssystem (112) gemäß einem der beiden vorhergehenden Ansprüche, **dadurch gekennzeichnet, dass** mindestens ein Frontlinsenssystem (134, 136, 316) eine für Licht zumindest teilweise durchlässige Einfärbung aufweist.

4. Stereoskopisches Abbildungssystem (112) gemäß einem der vorhergehenden Ansprüche, **dadurch gekennzeichnet, dass** mindestens eine Linse (510) mindestens eines Frontlinsensystems (134, 136, 316) und/oder mindestens eines Abbildungslinsensystems (152, 154, 318) als Linsenarray (526) ausgestaltet ist.

5. Stereoskopisches Abbildungssystem (112) gemäß einem der vorhergehenden Ansprüche, **gekennzeichnet durch** mindestens einen Spiegel (510) mit wellenlängenselektiven Reflexionseigenschaften, insbesondere Filtereigenschaften im sichtbaren und/oder infraroten Spektralbereich, insbesondere einer Bandpassfiltereigenschaft, und/oder einer wellenlängenselektiven Absorptionseigenschaft.

6. Stereoskopisches Abbildungssystem (112) gemäß einem der vorhergehenden Ansprüche, **gekennzeichnet durch** mindestens einen Spiegel (510) mit mindestens einer Reflexionsschicht (610) und mindestens einer Aufrauungszone (622) zur Vermeidung von Mehrfachreflexionen und/oder Geisterbildern (Ghosting).

7. Stereoskopisches Abbildungssystem (112) gemäß einem der vorhergehenden Ansprüche, **dadurch gekennzeichnet, dass** mindestens einer der Abbildungsarme (116, 118, 314) einen monolithischen Lichtwellenleiter (710) zur Strahlführung der eintretenden Lichtstrahlen aufweist.

8. Stereoskopisches Abbildungssystem (112) gemäß dem vorhergehenden Anspruch, **dadurch gekennzeichnet, dass** der mindestens eine monolithische Lichtwellenleiter (710) mindestens eine Linsenfunktion (712, 714) aufweist.

9. Stereoskopisches Abbildungssystem (112) gemäß dem vorhergehenden Anspruch, **dadurch gekennzeichnet, dass** der mindestens eine monolithische Lichtwellenleiter (710) mindestens eine Linse (712, 714) mindestens eines Frontlinsensystems (134, 136, 316) und/oder vorzugsweise mindestens eines Abbildungslinsensystems (152, 154, 318) umfasst.

10. Stereoskopisches Abbildungssystem (112) gemäß einem der drei vorhergehenden Ansprüche, **dadurch gekennzeichnet, dass** der mindestens eine monolithische Lichtwellenleiter (710) weiterhin mindestens eine Spiegelfunktion (150) aufweist, insbesondere einen auf eine Randfläche des Lichtwellenleiters (710) aufgebrachte Reflexionsschicht (610), insbesondere eine metallische und/oder dielektrische Reflexionsschicht (610) und/oder vorzugsweise eine Totalreflexionsgrenzfläche.

11. Stereoskopisches Abbildungssystem (112) gemäß einem der vier vorhergehenden Ansprüche, **dadurch gekennzeichnet, dass** der mindestens eine monolithische Lichtwellenleiter (710) einen Kunststoff, vorzugsweise Polycarbonat, aufweist.

12. Stereoskopisches Abbildungssystem (112) gemäß einem der vorhergehenden Ansprüche, insbesondere für den Einsatz im Innenbereich eines Kraftfahrzeugs, **dadurch gekennzeichnet, dass** das stereoskopische Abbildungssystem (112) weiterhin mindestens ein Gehäuse (210) aufweist, wobei das mindestens eine Gehäuse (210) eine Fahrgastinnenraumseite (212) aufweist, wobei in dem Gehäuse (210) auf der Fahrgastinnenraumseite (212) Eintrittsöffnungen (216, 218) für Lichtstrahlen für mindestens zwei der Abbildungsarme (116, 118, 314) vorgesehen sind, wobei der mindestens eine Bildsensor (124) auf der Fahrgastinnenraumseite (212) im Gehäuse (210) thermisch an das Gehäuse (210) angekoppelt ist.

13. Stereoskopisches Abbildungssystem (112) gemäß einem der vorhergehenden Ansprüche, **dadurch gekennzeichnet, dass** weiterhin mindestens ein Shuttersystem (412, 414) in mindestens einem Strahlengang mindestens eines Abbildungsarmes (116, 118, 314) vorgesehen ist, wobei das mindestens eine Shuttersystem (412, 414) derart ansteuerbar ist, dass der mindestens eine Strahlengang in dem mindestens einen Abbildungsarm (116, 118, 314) zeitweise ganz oder abschnittsweise unterbrochen werden kann.

14. Stereoskopisches Objekterkennungssystem (110), umfassend mindestens ein stereoskopisches Abbildungssystem (112) gemäß einem der vorhergehenden Ansprüche sowie weiterhin mindestens eine Auswertungsvorrichtung (114) zur Erkennung und/oder Positionsbestimmung von Objekten durch Auswertung der Bilddaten des mindestens einen Bildsensors (124).

## Claims

1. Stereoscopic imaging system (112) comprising at least one image sensor (124) for recording image data and at least two imaging arms (116, 118, 314), wherein each one of the at least two imaging arms (116, 118, 314) comprises at least one front lens system (134, 136, 316) and at least one imaging lens system (152, 154, 318) and furthermore in each case comprises at least one mirror system (146, 148) for deflecting a beam path of light rays entering through the at least one front lens system (134, 136, 316) onto the at least one image sensor (124) and wherein the at least one front lens system (134, 136, 316) has approximately parallel beam paths in at least one of the imaging arms (116, 118, 314), preferably in each of the imaging arms (116, 118, 314), **characterized in that** the stereoscopic imaging system (112) comprises at least three imaging arms (116, 118, 314), wherein at least two of the imaging arms (116, 118) are stereo imaging arms with at least partly overlapping image acquisition regions (120, 122) and wherein at least one third imaging arm (314) has an image acquisition region (324) different from the at least two stereo imaging arms (116, 118).

2. Stereoscopic imaging system (112) according to the preceding claim, **characterized in that** at least one lens of at least one front lens system (134, 136, 316) and/or of at least one imaging lens system (152, 154, 318) is manufactured from a plastic, preferably from polycarbonate.

3. Stereoscopic imaging system (112) according to one of the two preceding claims, **characterized in that** at least one front lens system (134, 136, 316) has colouring at least partly transmissive for light.

4. Stereoscopic imaging system (112) according to one of the preceding claims, **characterized in that** at least one lens (510) of at least one front lens system (134, 136, 316) and/or of at least one imaging lens system (152, 154, 318) is embodied as a lens array (526).

5. Stereoscopic imaging system (112) according to one of the preceding claims, **characterized by** at least one mirror (510) with wavelength-selective reflection properties, in particular filter properties in the visible and/or infrared spectral range, in particular a band pass filter property, and/or a wavelength-selective absorption property.

6. Stereoscopic imaging system (112) according to one of the preceding claims, **characterized by** at least one mirror (510) with at least one reflection layer (610) and at least one roughening zone (622) for avoiding multiple reflections and/or ghosting.

7. Stereoscopic imaging system (112) according to one of the preceding claims, **characterized in that** at least one of the imaging arms (116, 118, 314) has a monolithic optical waveguide (710) for beam guidance of the entering light rays.

8. Stereoscopic imaging system (112) according to the preceding claim, **characterized in that** the at least one monolithic optical waveguide (710) comprises at least one lens function (712, 714).

9. Stereoscopic imaging system (112) according to the preceding claim, **characterized in that** the at least one monolithic optical waveguide (710) comprises at least one lens (712, 714) of at least one front lens system (134, 136, 316) and/or, preferably, of at least one imaging lens system (152, 154, 318).

10. Stereoscopic imaging system (112) according to one of the three preceding claims, **characterized in that** the at least one monolithic optical waveguide (710) furthermore comprises at least one mirror function (150), in particular a reflection layer (610) applied to an edge surface of the optical waveguide (710), in particular a metallic and/or dielectric reflection layer (610) and/or, preferably, a total-internal reflection interface.

11. Stereoscopic imaging system (112) according to one of the four preceding claims, **characterized in that** the at least one monolithic optical waveguide (710) comprises a plastic, preferably polycarbonate.

12. Stereoscopic imaging system (112) according to one of the preceding claims, in particular for use in the interior of a motor vehicle, **characterized in that** the stereoscopic imaging system (112) furthermore comprises at least one housing (210), wherein the at least one housing (210) comprises a passenger compartment side (212), wherein entry openings (216, 218) for light rays for at least two of the imaging arms (116, 118, 314) are provided in the housing (210) on the passenger compartment side (212), wherein the at least one image sensor (124) is thermally coupled to the housing (210) on the passenger compartment side (212) in the housing (210).

13. Stereoscopic imaging system (112) according to one of the preceding claims, **characterized in that**, furthermore, at least one shutter system (412, 414) is provided in at least one beam path of at least one imaging arm (116, 118, 314), wherein the at least one shutter system (412, 414) can be actuated in such a way that the at least one beam path can, from time to time, be interrupted wholly or in sections in the at least one imaging arm (116, 118, 314).

14. Stereoscopic object identification system (110) comprising at least one stereoscopic imaging system (112) according to one of the preceding claims and, furthermore, at least one evaluation device (114) for identifying and/or determining the position of objects by evaluating the image data from the at least one image sensor (124).

## Revendications

1. Système d'imagerie stéréoscopique (112), comprenant au moins un capteur d'image (124) servant à recevoir des données d'image et au moins deux bras d'imagerie (116, 118, 314), chacun des au moins deux bras d'imagerie (116, 118, 314) comprenant au moins un système de lentilles frontales (134, 136, 316) et au moins un système de lentilles d'imagerie (152, 154, 318) ainsi que respectivement en outre au moins un système de miroir (146, 148) permettant de dévier un trajet de rayon des faisceaux lumineux pénétrant l'au moins un système de lentilles frontales (134, 136, 316) sur l'au moins un capteur d'image (124) et l'au moins un système de lentilles frontales (134, 136, 316) prévu dans au moins un des bras d'imagerie (116, 118, 314), de préférence chacun des bras d'imagerie (116, 118, 314), présentant des trajets de rayon quasiment parallèles, **caractérisé en ce que** le système d'imagerie stéréoscopique (112) comprend au moins trois bras d'imagerie (116, 118, 314), au moins deux des bras d'imagerie (116, 118) étant des bras d'imagerie stéréoscopique dotés de zones de détection d'image (120, 122) se chevauchant au moins en partie et au moins un troisième bras d'imagerie (314) comportant une zone de détection d'image (324) différente des au moins deux autres bras d'imagerie stéréoscopique (116, 118).

2. Système d'imagerie stéréoscopique (112) selon la revendication précédente, **caractérisé en ce qu'**au moins une lentille d'au moins un système de lentilles frontales (134, 136, 316) et/ou d'au moins un système de lentilles d'imagerie (152, 154, 318) est fabriquée en matière plastique, de préférence en polycarbonate.

3. Système d'imagerie stéréoscopique (112) selon l'une des deux revendications précédentes, **caractérisé en ce qu'**au moins un système de lentilles frontales (134, 136, 316) comporte une coloration laissant au moins en partie passer la lumière.

4. Système d'imagerie stéréoscopique (112) selon l'une quelconque des revendications précédentes, **caractérisé en ce qu'**au moins une lentille (510) d'au moins un système de lentilles frontales (134, 136, 316) et/ou d'au moins un système de lentilles d'imagerie (152, 154, 318) prend la forme d'une batterie de lentilles (526).

5. Système d'imagerie stéréoscopique (112) selon l'une quelconque des revendications précédentes, **caractérisé par** la présence d'au moins un miroir (510) avec des propriétés de réflexion avec sélection de certaines longueurs d'onde, notamment des propriétés de filtre dans le spectre visible et/ou infrarouge, notamment d'une propriété de filtre passe-bande et/ou une propriété d'absorption avec sélection de certaines longueurs d'onde.

6. Système d'imagerie stéréoscopique (112) selon l'une quelconque des revendications précédentes, **caractérisé par** la présence d'au moins un miroir (510) doté d'au moins une couche réfléchissante (610) et d'au moins une zone grainée (622) servant à éviter les réflexions multiples et/ou les images fantômes (ghosting).

7. Système d'imagerie stéréoscopique (112) selon l'une quelconque des revendications précédentes, **caractérisé en ce qu'**au moins un des bras d'imagerie (116, 118, 314) comporte un conducteur d'ondes lumineuses (710) monolithique pour guider le rayon des faisceaux lumineux entrants.

8. Système d'imagerie stéréoscopique (112) selon la revendication précédente, **caractérisé en ce que** l'au moins un conducteur d'ondes lumineuses (710) monolithique présente au moins une fonction de lentille (712, 714).

9. Système d'imagerie stéréoscopique (112) selon la revendication précédente, **caractérisé en ce que** l'au moins un conducteur d'ondes lumineuses (710) monolithique comprend au moins une lentille (712, 714) d'au moins un système de lentilles frontales (134, 136, 316) et/ou de préférence d'au moins un système de lentilles d'imagerie (152, 154, 318).

10. Système d'imagerie stéréoscopique (112) selon l'une des trois revendications précédentes, **caractérisé en ce que** l'au moins un conducteur d'ondes lumineuses (710) monolithique comporte en outre au moins une fonction de miroir (150), notamment une couche réfléchissante (610) appliquée sur une surface de bordure du conducteur d'ondes lumineuses (710), notamment une couche réfléchissante (610) métallique et/ou diélectrique et/ou de préférence une surface limite entièrement réfléchissante.

11. Système d'imagerie stéréoscopique (112) selon l'une des quatre revendications précédentes, **caractérisé en ce que** l'au moins un conducteur d'ondes lumineuses (710) monolithique comporte une matière plastique, de préférence du polycarbonate.

12. Système d'imagerie stéréoscopique (112) selon l'une quelconque des revendications précédentes, notamment destiné à être encastré dans la zone intérieure d'un véhicule automobile, **caractérisé en ce que** le système d'imagerie stéréoscopique (112) comporte en outre au moins un carter (210), l'au moins un carter (210) comportant un côté d'habitacle (212), des ouvertures d'entrée (216, 218) prévues pour les faisceaux lumineux d'au moins deux des bras d'imagerie (116, 118, 314) étant prévues dans le carter (210) sur le côté d'habitacle (212), l'au moins un capteur d'image (124) étant couplé sur le plan thermique au carter (210) du côté d'habitacle (212) du carter (210).

13. Système d'imagerie stéréoscopique (112) selon l'une quelconque des revendications précédentes, **caractérisé en ce qu'**en outre au moins un système d'obturation (412, 414) placé sur au moins un trajet de rayon d'au moins un bras d'imagerie (116, 118, 314) est prévu, l'au moins un système d'obturation (412, 414) pouvant être commandé de telle sorte que l'au moins un trajet de rayon peut être interrompu temporairement en totalité ou en partie dans l'au moins un bras d'imagerie (116, 118, 314).

14. Système de reconnaissance d'objet stéréoscopique (110), comprenant au moins un système d'imagerie stéréoscopique (112) selon l'une quelconque des revendications précédentes ainsi qu'en outre au moins un dispositif d'analyse (114) permettant de reconnaître et/ou de déterminer la position d'objets par analyse des données d'image de l'au moins un capteur d'image (124).
